(19) Europäisches Patentamt
European Patent Office
Office européen des brevets

(11) **EP 3 767 009 A1**

(12) **EUROPEAN PATENT APPLICATION**
published in accordance with Art. 153(4) EPC

(43) Date of publication:
**20.01.2021 Bulletin 2021/03**

(51) Int Cl.:
*C23C 28/04* (2006.01)    *C22C 14/00* (2006.01)
*C25B 9/00* (2021.01)    *C25B 11/03* (2021.01)
*C25B 11/10* (2006.01)    *C25B 13/02* (2006.01)
*C25B 13/04* (2021.01)    *C25D 11/26* (2006.01)
*C23C 26/00* (2006.01)    *H01M 4/86* (2006.01)
*H01M 4/88* (2006.01)    *H01M 8/10* (2016.01)

(21) Application number: **19766633.2**

(22) Date of filing: **12.03.2019**

(86) International application number:
**PCT/JP2019/010073**

(87) International publication number:
**WO 2019/176956 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2018 JP 2018044659**
**08.03.2019 JP 2019042773**

(71) Applicant: **Mitsubishi Materials Corporation**
**Tokyo 100-8117 (JP)**

(72) Inventors:
• **SANO Yosuke**
**Kitamoto-shi, Saitama 364-0022 (JP)**
• **OHMORI Shinichi**
**Kitamoto-shi, Saitama 364-0022 (JP)**

(74) Representative: **Gille Hrabal**
**Brucknerstrasse 20**
**40593 Düsseldorf (DE)**

(54) **TITANIUM BASE MATERIAL, METHOD FOR PRODUCING TITANIUM BASE MATERIAL, ELECTRODE FOR WATER ELECTROLYSIS, AND WATER ELECTROLYSIS DEVICE**

(57) This titanium base material has a base material body formed of titanium or a titanium alloy, in which a Magneli phase titanium oxide film formed of a Magneli phase titanium oxide represented by a chemical formula $Ti_nO_{2n-1}$ ($4 \leq n \leq 10$) is formed on a surface of the base material body. Here, the Magneli phase titanium oxide film preferably contains at least one or both of $Ti_4O_7$ and $Ti_5O_9$.

FIG. 1

EP 3 767 009 A1

**Description**

TECHNICAL FIELD

The present invention relates to a titanium base material excellent in conductivity and corrosion resistance, a method for producing a titanium base material, an electrode for water electrolysis formed of the titanium base material, and a water electrolysis device.

The present application claims priority based on Japanese Patent Application No. 2018-044659 filed in Japan on March 12, 2018 and Japanese Patent Application No. 2019-042773 filed in Japan on March 8, 2019 and the contents thereof are incorporated herein.

BACKGROUND ART

As shown in Patent Document 1 for example, titanium base materials formed of titanium or a titanium alloy are used in current-carrying members such as electrodes, in particular, in applications which require oxidation resistance (corrosion resistance).

However, for example, in a case of using a cathode electrode of a solid polymer electrolyte fuel cell (PEFC), an anode electrode of a water electrolysis device, an electrode material for a lithium ion battery or a lithium ion capacitor, or the like in a harsh corrosive environment such as a high potential, oxygenated, strongly acidic atmosphere, there are problems in that the corrosion resistance is not sufficient and an insulative $TiO_2$ film is formed on the surface of the titanium base material during use and the performance as a current-carrying member such as an electrode deteriorates.

Therefore, for example, Patent Document 2 proposes forming a noble metal coated film of gold, platinum, or the like on the surface of a base material formed of aluminum, nickel, or titanium to improve corrosion resistance while ensuring conductivity.

In addition, Patent Document 3 proposes a titanium material in which an oxide film, in which an X-ray diffraction peak of $TiO_2$ is not observed, is formed on the surface of titanium or a titanium alloy.

Furthermore, Patent Document 4 proposes a titanium material having a titanium oxide layer having an oxygen/titanium atomic concentration ratio (O/Ti) of 0.3 or more and 1.7 or less on the surface of a titanium material formed of pure titanium or a titanium alloy, in which an alloy layer including at least one type of noble metal selected from Au, Pt, and Pd is formed on this titanium oxide layer.

[Citation List]

[Patent Document]

[Patent Document 1]
Japanese Unexamined Patent Application, First Publication No. 2003-226992
[Patent Document 2]
Japanese Unexamined Patent Application, First Publication No. 2010-135316
[Patent Document 3]
Japanese Patent No. 5831670
[Patent Document 4]
Japanese Unexamined Patent Application, First Publication No. 2010-236083

[Non Patent Document]

[Non Patent Document 1]
Tsutomu Ioroi et; Stability of Corrosion-Resistant Magneli-Phase Ti4O7-Supported PEMFC Catalysts High Potentials, "Jornal of The Electorochemical Society", 155(4)B321-B326 (2008)

SUMMARY OF INVENTION

Technical Problem

Here, as shown in Patent Document 2 and Patent Document 4, in a case where a noble metal film is formed, the cost increases significantly and wide use is not possible.

In addition, since the oxide film described in Patent Document 3 has insufficient conductivity and corrosion resistance, application is not possible as a member used in a harsh environment.

Here, Magneli phase titanium oxide represented by the chemical formula $Ti_nO_{2n-1}$ ($4 \leq n \leq 10$) may be used as examples of a material having excellent conductivity and corrosion resistance. This Magneli phase titanium oxide has the same corrosion resistance as $TiO_2$ and the same conductivity as graphite.

As a Magneli phase titanium oxide of the related art, for example, as shown in Non-Patent Document 1, the Magneli phase titanium oxide is produced by a thermal reduction method for reducing $TiO_2$ at a high temperature to be provided in powder form.

However, in a case where $TiO_2$ is formed on the surface of a base material formed of titanium or a titanium alloy and thermally reduced, oxygen diffuses to the base material side and the base material itself oxidizes, which deteriorates properties such as conductivity. Therefore, a titanium base material or the like having a Magneli phase titanium oxide film is not provided.

The present invention is made against the background of the above circumstances and has an object of providing a titanium base material with particularly excellent conductivity and corrosion resistance and able to be used even in a harsh corrosive environment, a method for producing a titanium base material, an electrode for water electrolysis formed of this titanium base material, and a water electrolysis device.

Solution to Problem

In order to solve these problems and achieve the object described above, a titanium base material of the present invention includes a base material body formed of titanium or a titanium alloy, in which a Magneli phase titanium oxide film formed of a Magneli phase titanium oxide represented by a chemical formula $Ti_nO_{2n-1}$ ($4 \leq n \leq 10$) is formed on a surface of the base material body.

According to the titanium base material having this configuration, since the Magneli phase titanium oxide film formed of a Magneli phase titanium oxide represented by the chemical formula $Ti_nO_{2n-1}$ ($4 \leq n \leq 10$) is formed on a surface of the base material body formed of titanium or a titanium alloy, the conductivity and corrosion resistance are particularly excellent.

Thus, use is possible as a current-carrying member such as an electrode even in a harsh corrosive environment such as a high potential, oxygenated, strongly acidic atmosphere.

Here, in the titanium base material of the present invention, it is preferable that the Magneli phase titanium oxide film contains at least one or both of $Ti_4O_7$ and $Ti_5O_9$.

In such a case, since the Magneli phase titanium oxide film contains at least one or both of $Ti_4O_7$ and $Ti_5O_9$, which are particularly excellent in conductivity and corrosion resistance, it is particularly suitable as a current-carrying member used in a harsh corrosive environment such as a high potential, oxygenated, strongly acidic atmosphere.

In addition, in the titanium base material of the present invention, it is preferable that the Magneli phase titanium oxide film has a film thickness in a range of 0.1 $\mu$m or more and 30 $\mu$m or less.

In this case, since the film thickness of the Magneli phase titanium oxide film is 0.1 $\mu$m or more, it is possible to secure a sufficient corrosion resistance.

On the other hand, since the film thickness of the Magneli phase titanium oxide film is 30 $\mu$m or less, it is possible to secure sufficient conductivity as a titanium base material.

In addition, in an oxide electrode which does not use a Ti base material and in which the entire electrode is formed of Magneli phase titanium oxide, the strength of the electrode is insufficient.

Further, in the titanium base material of the present invention, it is preferable that the base material body is a porous body having a porosity in a range of 30% or more and 97% or less.

In such a case, since the base material body formed of titanium or a titanium alloy is a porous body and the porosity thereof is set to 30% or more, it is possible to make the specific surface area large and to promote the reaction on the surface of the titanium base material. In addition, it is possible to efficiently discharge the gas generated by the reaction.

On the other hand, since the porosity of the base material body is 97% or less, it is possible to secure the strength of the base material body.

In addition, in the titanium base material of the present invention, it is desirable that the Magneli phase Ti oxide film has a porous structure.

In such a case, the specific surface area of the electrode is further improved and it becomes possible to provide a wide electrode reaction field.

The method for manufacturing a titanium base material of the present invention is the method for manufacturing the titanium base material described above, the method including a $TiO_2$ film forming step of forming a $TiO_2$ film on a surface of a base material body formed of titanium or a titanium alloy, and a reduction process step of reducing the $TiO_2$ film formed on the surface of the base material body by a microwave plasma reduction method to obtain a Magneli phase titanium oxide film formed of a Magneli phase titanium oxide represented by a chemical formula $Ti_nO_{2n-1}$ ($4 \leq n \leq 10$), in which the reduction process step is carried out under conditions of a substrate temperature of 400°C or lower and a process time of 15 minutes or less.

In the method for producing a titanium base material having this configuration, since a $TiO_2$ film forming step of forming a $TiO_2$ film on a surface of the base material body formed of titanium or a titanium alloy, and a reduction process step of reducing the $TiO_2$ film by a microwave plasma reduction method to obtain a Magneli phase titanium oxide film are provided, it is possible to produce a titanium base material having a Magneli phase titanium oxide film formed of Magneli phase titanium oxide represented by the chemical formula $Ti_nO_{2n-1}$ ($4 \leq n \leq 10$). Then, since the reduction process step is carried out under conditions where the substrate temperature is 400°C or lower and the process time is 15 minutes or less, it is possible to suppress the diffusion of oxygen to the base material body side and suppress the deterioration of the properties of the base material body.

Furthermore, it is possible to control the film thickness of the Magneli phase titanium oxide film by adjusting the film thickness of the $TiO_2$ film in the $TiO_2$ film forming step.

The electrode for water electrolysis of the present invention is formed of the titanium base material described above.

Since the electrode for water electrolysis having this configuration is formed of the titanium base material on which the Magneli phase titanium oxide film formed of Magneli phase titanium oxide represented by the chemical formula $Ti_nO_{2n-1}$ ($4 \leq n \leq 10$) is formed, the conductivity and corrosion resistance are particularly excellent and it is possible to suppress deterioration due to oxidation and to greatly improve the service life. In addition, since the corrosion resistance is excellent, use is possible as a substitute for a noble metal electrode and it is possible to form the electrode for water electrolysis at low cost.

Here, in the electrode for water electrolysis of the present invention, it is preferable that, in a voltammetry test in which one cycle is denoted by a holding time of 1 minute at 2.5 V and 1 minute at 0 V, an electrolysis efficiency after 1,200 cycles is 90% or more of an initial value.

In such a case, in the voltammetry test simulating the start and stop of the water electrolysis device, since the electrolysis efficiency after 1,200 cycles is maintained at 90% or more with respect to the initial value, the deterioration of the electrode for water electrolysis during use is reliably suppressed and it is possible to reliably improve the service life.

The water electrolysis device of the present invention is provided with the electrode for water electrolysis described above.

According to the electrode for water electrolysis having this configuration, since the electrode for water electrolysis formed of a titanium base material on which the Magneli phase titanium oxide film formed of Magneli phase titanium oxide represented by the chemical formula $Ti_nO_{2n-1}$ ($4 \leq n \leq 10$) is formed is provided, it is possible to suppress deterioration of the electrode for water electrolysis due to oxidation during use and stable use for a long period of time becomes possible. In addition, it is not necessary to use the noble metal electrode and it is possible to significantly reduce the production cost of the water electrolysis device.

Advantageous Effects of Invention

According to the present invention, it is possible to provide a titanium base material with particularly excellent conductivity and corrosion resistance and able to be used even in a harsh corrosive environment, a method for producing a titanium base material, an electrode for water electrolysis formed of this titanium base material, and a water electrolysis device.

BRIEF DESCRIPTION OF DRAWINGS

Fig. 1 is an explanatory diagram showing an example of a titanium base material which is an embodiment of the present invention.
Fig. 2 is an enlarged schematic diagram of a surface layer portion of the titanium base material shown in Fig. 1.
Fig. 3 is a flow chart showing an example of a method for producing the titanium base material shown in Fig. 1.
Fig. 4 is an explanatory diagram showing production steps for producing the titanium base material shown in Fig. 1. Fig. 4(a) shows a base material body preparing step S01, Fig. 4(b) shows a $TiO_2$ film forming step S02, and Fig. 4(c) shows a reduction process step S03.
Fig. 5 is a schematic explanatory diagram of a water electrolysis device provided with an electrode for water electrolysis which is an embodiment of the present invention.
Fig. 6 is a graph showing XRD analysis results of Invention Example 2 and Comparative Example 1 in Examples.
Fig. 7 is an SEM image showing a result of observing a cross-section of the titanium base material of Invention Example 1 in the Examples.
Fig. 8 is an SEM image showing a result of observing a cross-section of the titanium base material of Invention Example 11 in the Examples.

## DESCRIPTION OF EMBODIMENTS

A description will be given below of a titanium base material, a method for producing a titanium base material, an electrode for water electrolysis, and a water electrolysis device, which are embodiments of the present invention, with reference to the accompanying drawings.

<Titanium Base Material and Method for producing Titanium Base Material>

A titanium base material 10 of the present embodiment is used as, for example, a current-carrying member such as a cathode electrode of a solid polymer electrolyte fuel cell (PEFC), an anode electrode of a water electrolysis device, and an electrode material for a lithium ion battery or a lithium ion capacitor.

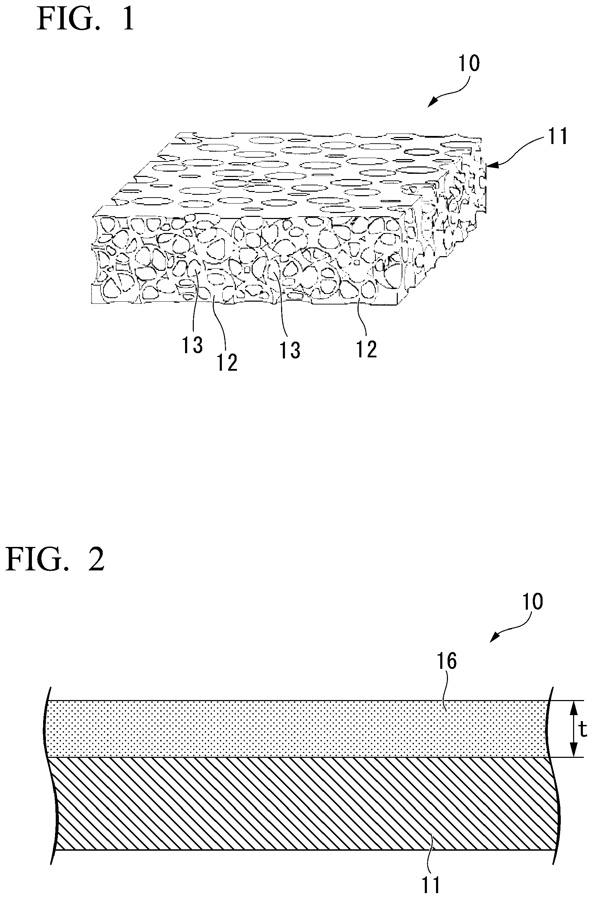

As shown in Fig. 1 and Fig. 2, the titanium base material 10 of the present embodiment is provided with a base material body 11 formed of titanium or a titanium alloy, and a Magneli phase titanium oxide film 16 formed on the surface of the base material body 11.

In the present embodiment, as shown in Fig. 1, the base material body 11 is a porous body and is provided with a skeleton portion 12 having a three-dimensional network structure and a pore portion 13 surrounded by the skeleton portion 12.

The base material body 11 has a porosity P in a range of 30% or more and 97% or less. The porosity P of the base material body 11 is calculated by the following formula.

$$P(\%)=(1-(W/(V \times D_T))) \times 100$$

W: Mass of base material body 11 (g)
V: Volume of base material body 11 ($cm^3$)
$D_T$: True density ($g/cm^3$) of titanium or a titanium alloy which forms the base material body 11

In the present embodiment, the base material body 11 formed of this porous body is formed of, for example, a titanium sintered body obtained by sintering a titanium sintering raw material including titanium.

In addition, the pore portions 13 surrounded by the skeleton portion 12 are structured to communicate with each other and open toward the outside of the base material body 11.

Then, as shown in Fig. 2, the Magneli phase titanium oxide film 16 is formed on the surface of the base material body 11.

This Magneli phase titanium oxide film 16 is formed of a Magneli phase titanium oxide represented by the chemical formula $Ti_nO_{2n-1}$ ($4 \leq n \leq 10$).

In the present embodiment, the Magneli phase titanium oxide film 16 contains at least one or both of $Ti_4O_7$ and $Ti_5O_9$. It is possible to identify the titanium oxide structure in the Magneli phase titanium oxide film 16 by an X-ray diffraction analysis (XRD) method.

Here, in the Magneli phase titanium oxide film 16 of the present embodiment, the XRD peaks of $Ti_4O_7$ and $Ti_5O_9$ in X-ray diffraction (XRD) are included and the sum of the maximum peak intensities of both is greater than the maximum peak intensity of the other Magneli phase titanium oxide ($6 \leq n \leq 10$).

Here, when a film thickness t of the Magneli phase titanium oxide film 16 is thinned, the corrosion resistance is lowered but the conductivity is improved. On the other hand, when the film thickness t of the Magneli phase titanium oxide film 16 is increased, the corrosion resistance is improved but the conductivity is decreased. Therefore, the film thickness t of the Magneli phase titanium oxide film 16 is preferably set appropriately according to the properties required for the titanium base material 10.

In the present embodiment, the lower limit of the film thickness t of the Magneli phase titanium oxide film 16 is set to 0.1 $\mu$m or more in order to sufficiently improve the corrosion resistance. In addition, in order to sufficiently improve the conductivity, the upper limit of the film thickness t of the Magneli phase titanium oxide film 16 is set to 30 $\mu$m or less.

In order to further improve the corrosion resistance, the lower limit of the film thickness t of the Magneli phase titanium oxide film 16 is preferably 0.2 $\mu$m or more, and more preferably 0.3 $\mu$m or more. On the other hand, in order to further improve the conductivity, the upper limit of the film thickness t of the Magneli phase titanium oxide film 16 is preferably 5 $\mu$m or less, and more preferably 3 $\mu$m or less.

Further, in the present embodiment, the Magneli phase titanium oxide film 16 has a nanometer or micrometer order porous structure in the film.

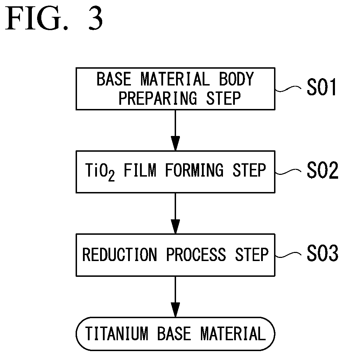

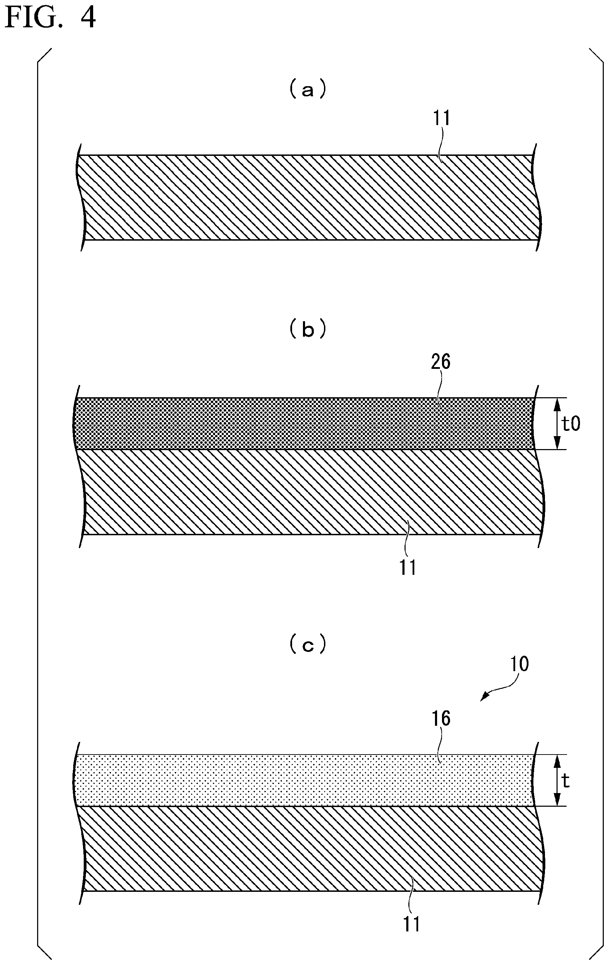

A description will be given below of the method for producing the titanium base material 10 of the present embodiment with reference to the flow chart of Fig. 3, the step chart of Fig. 4, and the like.

(Base Material Body Preparing Step S01)

First, the base material body 11 formed of titanium and a titanium alloy shown in Fig. 4(a) is prepared. In the present embodiment, a porous titanium sintered body is prepared as the base material body 11.

It is possible to produce the base material body 11 formed of this porous titanium sintered body, for example, by the following steps. A sintering raw material including titanium is mixed with an organic binder, a foaming agent, a plasticizer, water and, as necessary, a surfactant to prepare a foamable slurry. This foamable slurry is applied using a doctor blade (applying device) to form a sheet-shaped molded body. This sheet-shaped molded body is heated to foam and obtain a foamed molded body. Then, the result is degreased and then sintered. Due to this, the base material body 11 formed of a porous titanium sintered body is produced. (For example, refer to Japanese Unexamined Patent Application, First Publication No. 2006-138005 and Japanese Unexamined Patent Application, First Publication No. 2003-082405)

($TiO_2$ Film Forming Step S02)

Next, as shown in Fig. 4(b), a $TiO_2$ film 26 is formed on the surface of the base material body 11. This $TiO_2$ film forming step S02 is carried out under a temperature condition of 100°C or lower in order to suppress oxygen from diffusing to the base material body 11 side.

The lower limit value of temperature conditions is not limited; however, it is possible to efficiently perform the following plasma electrolytic oxidation process in a range of up to 0°C.

In the present embodiment, the $TiO_2$ film 26 is formed by a plasma electrolytic oxidation method in which a higher voltage than that of normal anodic oxidation is applied to generate an arc discharge on the surface of the base material to promote oxidation. Specifically, the plasma electrolytic oxidation process is carried out in an aqueous solution bath of $K_3PO_4$, $Na_3PO_4$, $K_4P_2O_7$, $Na_2P_2O_7$, or the like.

Here, a film thickness t0 of the $TiO_2$ film 26 is preferably in a range of 0.1 $\mu$m or more and 30 $\mu$m or less.

(Reduction Process Step S03)

Next, the $TiO_2$ film 26 is subjected to a reduction process using plasma generated by irradiating the gas with microwaves (microwave plasma reduction process), such that the $TiO_2$ film 26 is changed to the Magneli phase titanium oxide film 16 formed of Magneli phase titanium oxide represented by the chemical formula $Ti_nO_{2n-1}$ ($4 \leq n \leq 10$), as shown in Fig. 4(c). In order to suppress oxygen from diffusing to the base material body 11 side, this reduction process step S03 is carried out under conditions of a substrate temperature of 400°C or lower and a process time of 15 minutes or less.

It is possible to set the lower limit value of the substrate temperature in the reduction process step S03 to 0°C, and the lower limit value of the process time to 0.01 minutes.

By subjecting the entire $TiO_2$ film 26 to a reduction process to form the Magneli phase titanium oxide film 16, the film thickness t0 of the $TiO_2$ film 26 becomes the film thickness t of the Magneli phase titanium oxide film 16. Therefore, adjusting the film thickness t0 of the $TiO_2$ film 26 in the $TiO_2$ film forming step S02 makes it possible to control the film thickness t of the Magneli phase titanium oxide film 16.

By the production method described above, the titanium base material 10 is produced in which the Magneli phase titanium oxide film 16 formed of Magneli phase titanium oxide represented by the chemical formula $Ti_nO_{2n-1}$ ($4 \leq n \leq 10$) is formed on the surface of the base material body 11 formed of titanium or a titanium alloy.

<Electrode for water electrolysis and Water Electrolysis Device>

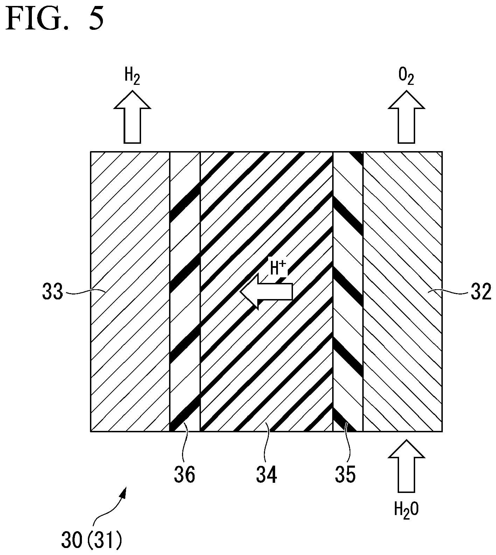

Fig. 5 shows a schematic diagram of the electrode for water electrolysis and the water electrolysis device according to the present embodiment. The water electrolysis device of the present embodiment is a solid polymer electrolyte water decomposition device having high electrolysis efficiency and hydrogen purity at the time of production.

As shown in Fig. 5, a water electrolysis device 30 of the present embodiment is provided with a water electrolysis cell 31 provided with an anode electrode 32 and a cathode electrode 33 which are arranged to face each other, and an ion permeable membrane 34 which is arranged between the anode electrode 32 and the cathode electrode 33. Here, catalyst layers 35 and 36 are formed on both surfaces of the ion permeable membrane 34 (contact surface with the anode electrode 32 and contact surface with the cathode electrode 33), respectively.

Here, for the cathode electrode 33, the ion permeable membrane 34, and the catalyst layers 35 and 36, it is possible to use examples used in general solid polymer electrolyte water electrolysis devices of the related art.

The anode electrode 32 described above is used as the electrode for water electrolysis according to the present embodiment. The anode electrode 32 (electrode for water electrolysis) is formed of the titanium base material 10 according to the present embodiment described above, and is provided with the base material body 11 formed of titanium or a titanium alloy and the Magneli phase titanium oxide film 16 formed on the surface of the base material body 11. In addition, the base material body 11 is a porous body, and has a structure provided with the skeleton portion 12 having a three-dimensional network structure and the pore portion 13 surrounded by the skeleton portion 12.

Here, in the electrode for water electrolysis (anode electrode 32) according to the present embodiment, in a voltammetry test in which one cycle is denoted by a holding time of 1 minute at 2.5 V and 1 minute at 0 V, the electrolysis efficiency after 1,200 cycles is preferably 90% or more with respect to the initial value.

In the water electrolysis device 30 (water electrolysis cell 31) described above, as shown in Fig. 5, water ($H_2O$) is supplied from the side of the anode electrode 32 and the anode electrode 32 and the cathode electrode 33 are energized. By doing so, oxygen ($O_2$) generated by the electrolysis of water is discharged from the anode electrode 32 and hydrogen (H2) is discharged from the cathode electrode 33.

Here, in the anode electrode 32, as described above, water (liquid) and oxygen (gas) are circulated, thus, in order to stably circulate the liquid and gas, it is preferable to have a high porosity. In addition, since the anode electrode 32 is exposed to oxygen, there is a demand for excellent corrosion resistance. Therefore, the electrode for water electrolysis formed of the titanium base material 10 of the present embodiment is particularly suitable as the anode electrode 32.

According to the titanium base material 10 of the present embodiment configured as described above, since the Magneli phase titanium oxide film 16 formed of Magneli phase titanium oxide represented by the chemical formula $Ti_nO_{2n-1}$ ($4 \leq n \leq 10$) is formed on the surface of the base material body 11 formed of titanium or a titanium alloy, the conductivity and corrosion resistance are particularly excellent.

Thus, use is possible as a current-carrying member such as an electrode even in a harsh corrosive environment such as a high potential, oxygenated, strongly acidic atmosphere.

In addition, in the present embodiment, since the Magneli phase titanium oxide film 16 contains, as the Magneli phase titanium oxide, at least one or both of $Ti_4O_7$ and $Ti_5O_9$, which are particularly excellent in conductivity and corrosion resistance, it is particularly suitable as a current-carrying member used in a harsh corrosive environment such as a high potential, oxygenated, strongly acidic atmosphere.

Furthermore, in the present embodiment, since the film thickness t of the Magneli phase titanium oxide film 16 is in a range of 0.1 $\mu$m or more and 30 $\mu$m or less, it is possible to improve the corrosion resistance and the conductivity in a well-balanced manner.

In addition, in the present embodiment, since the base material body 11 formed of titanium or a titanium alloy is a porous body, and the porosity P thereof is set to 30% or more, the specific surface area becomes large and it is possible to promote a reaction on the surface of the titanium base material 10. In addition, it is possible to efficiently discharge the gas generated by the reaction. Thus, the result is particularly suitable as an electrode member.

On the other hand, since the porosity P of the base material body 11 formed of a porous body is 97% or less, it is possible to secure the strength of the base material body 11.

In addition, in the present embodiment, the Magneli phase titanium oxide film 16 has a nanometer or micrometer order porous structure and it is possible to further improve the surface area of an electrode base material.

Since the method for producing the titanium base material 10 according to the present embodiment is provided with the base material body preparing step S01 for preparing the base material body 11 formed of titanium or a titanium alloy, the $TiO_2$ film forming step S02 of forming the $TiO_2$ film 26 on the surface of the base material body 11, and the reduction process step S03 of reducing the $TiO_2$ film 26 by a microwave plasma reduction method to obtain the Magneli phase titanium oxide film 16 formed of a Magneli phase titanium oxide represented by the chemical formula $Ti_nO_{2n-1}$ ($4 \leq n \leq 10$), it is possible to produce the titanium base material 10 having particularly excellent corrosion resistance and conductivity.

Since the $TiO_2$ film forming step S02 is carried out at 100°C or lower and the reduction process step S03 is carried out under the condition that the substrate temperature is 400°C or lower and the process time is 15 minutes or less, it is possible to suppress the diffusion of oxygen to the base material body 11 side and to suppress deterioration of the properties of the base material body 11.

Furthermore, adjusting the film thickness t0 of the $TiO_2$ film 26 formed in the $TiO_2$ film forming step S02 makes it possible to accurately control the film thickness t of the Magneli phase titanium oxide film 16.

Since the electrode for water electrolysis (anode electrode 32) of the present embodiment is formed of the titanium base material 10 described above, the conductivity and corrosion resistance are particularly excellent and it is possible to suppress deterioration due to oxidation and to greatly improve the service life. In addition, since corrosion resistance is excellent, use is possible as a substitute for the noble metal electrode, and it is possible to form an electrode for water electrolysis (anode electrode 32) at low cost.

In addition, in the electrode for water electrolysis (anode electrode 32) of the present embodiment, in a voltammetry test in which one cycle is denoted by a holding time of 1 minute at 2.5 V and 1 minute at 0 V, in a case where the electrolysis efficiency after 1,200 cycles is 90% or more with respect to the initial value, deterioration of the electrode for water electrolysis during use is reliably suppressed and it is possible to reliably improve the service life.

In the water electrolysis device 30 of the present embodiment, since the electrode for water electrolysis formed of the titanium base material 10 described above is used for the anode electrode 32, even in a use environment exposed to oxygen gas, it is possible to suppress deterioration of the electrode for water electrolysis (anode electrode 32) due to oxidation and to use the electrode stably for a long period of time. In addition, since the corrosion resistance is excellent, it is not necessary to use a noble metal electrode, and it is possible to significantly reduce the production cost of the water electrolysis device 30. Furthermore, since the titanium base material 10 is formed of the porous body having the structure described above, it is possible to favorably circulate water and oxygen gas.

Although embodiments of the present invention are described above, the present invention is not limited thereto and appropriate modification is possible without departing from the technical idea of the invention.

For example, in the present embodiment, the base material body 11 is described as a porous body, but the present invention is not limited thereto and the base material body 11 may be in the shape of a plate, wire, rod, tube, or the like. In addition, the base material body 11 is described as being formed of a titanium sintered body, but, without being limited thereto, a mesh plate or the like may be used.

In addition, in the present embodiment, the Magneli phase titanium oxide film is described as containing at least one or both of $Ti_4O_7$ and $Ti_5O_9$, but the present invention is not limited thereto, and the above may be formed of Magneli phase titanium oxide represented by the chemical formula $Ti_nO_{2n-1}$ ($4 \leq n \leq 10$).

Furthermore, in the present embodiment, description is given assuming that the film thickness of the Magneli phase titanium oxide film is in a range of 0.1 $\mu$m or more and 30 $\mu$m or less, but the present invention is not limited thereto and the film thickness of the Magneli phase titanium oxide film is preferably set as appropriate according to the properties required for the titanium base material.

In addition, in the present embodiment, a description is given in which the Magneli phase titanium oxide film had a porous structure, but the present invention is not limited thereto.

Furthermore, in the present embodiment, a water electrolysis device (water electrolysis cell) having the structure shown in Fig. 5 is described as an example, but the present invention is not limited thereto and as long as an electrode for water electrolysis formed of the titanium base material according to the present embodiment is provided, the water electrolysis device (water electrolysis cell) may have another structure.

[Examples]

(Example 1)

A description will be given below of the results of confirmation experiments performed to confirm the effects of the present invention.

First, the base material body shown in Table 1 is prepared. In Table 1, "titanium" was pure titanium having a purity of 99.9 mass% or more, and "titanium alloy" was a titanium alloy having Ti-0.15 mass% Pd.

The dimensions of each prepared base material body were width 50 mm x length 60 mm x thickness 0.3 mm.

Next, a $TiO_2$ film is formed on the surface of the base material body. A plasma electrolytic oxidation process was carried out in an aqueous solution of $K_3PO_4$. A high-density carbon plate was used as the cathode and the above was carried out under conditions of a temperature of 100°C or lower, a voltage of 450 V, and a time of 0 to 300 minutes. The film thickness of the $TiO_2$ film was set to the value shown in Table 1 by adjusting the time of the plasma electrolytic oxidation process.

Next, the base material body on which the $TiO_2$ film was formed was charged into a microwave plasma reduction device and the inside of the device was decompressed to a vacuum ($3.8 \times 10^{-2}$ torr (5 Pa) or less) once. After that, hydrogen gas was introduced into the device to set the pressure to 30 Pa, and then irradiated with microwaves of 2.45 GHz. The reduction time was 0.1 to 15 minutes.

Here, in Comparative Examples 1, 3, and 7, a reduction process was not carried out. In addition, in Comparative Examples 4 and 5, the reduction process was performed by a thermal reduction method.

As described above, a titanium base material was obtained which had a titanium oxide film (Magneli phase titanium oxide film in the Invention Examples) formed on the surface of a base material body formed of titanium or a titanium alloy.

With respect to the obtained titanium base material, the identification of the titanium oxide film, and the thickness, the conductivity, and the corrosion resistance of the titanium oxide film were evaluated as follows.

(Identification of Titanium Oxide in Titanium Oxide Film)

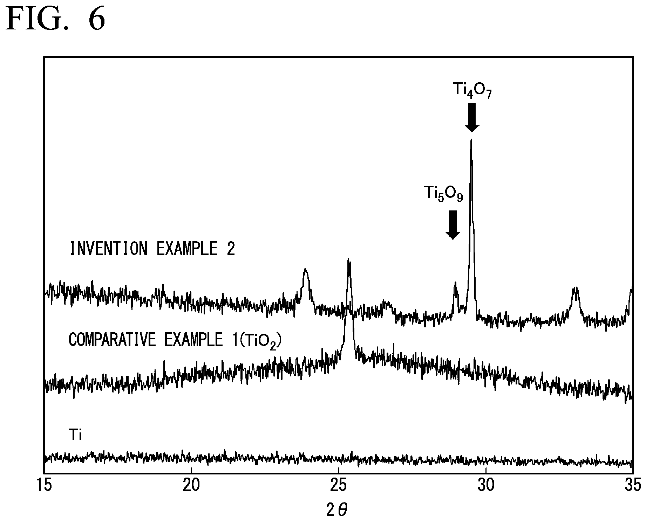

The titanium oxide of the titanium oxide film was identified by the X-ray diffraction analysis (XRD) method. The acceleration voltage was set to 30 keV and a Cu Ka line of 8 keV was used for measurement. The measurement range was 2θ=15° to 35°. The presence/absence of $Ti_4O_7$ and $Ti_5O_9$ was confirmed by the presence/absence of peaks near 21°, 26°, and 30° ($Ti_4O_7$), 22°, 26°, and 29° ($Ti_5O_9$), respectively. The evaluation results are shown in Table 2. In addition, Fig. 6 shows the XRD analysis results of Invention Example 2 and Comparative Example 1.

(Thickness of Titanium Oxide Film)

The sample after film formation is filled with resin and cut in the direction perpendicular to the thickness direction of the titanium oxide film to expose a cross-section thereof. This cross-section was observed by SEM, and five points were equally taken from one end to the other end of the titanium oxide film layer in the SEM image observed at a magnification of 5,000 times and the thicknesses were calculated for each point. Then, the thickness of the titanium oxide film was determined from the average value of the measured 5 points.

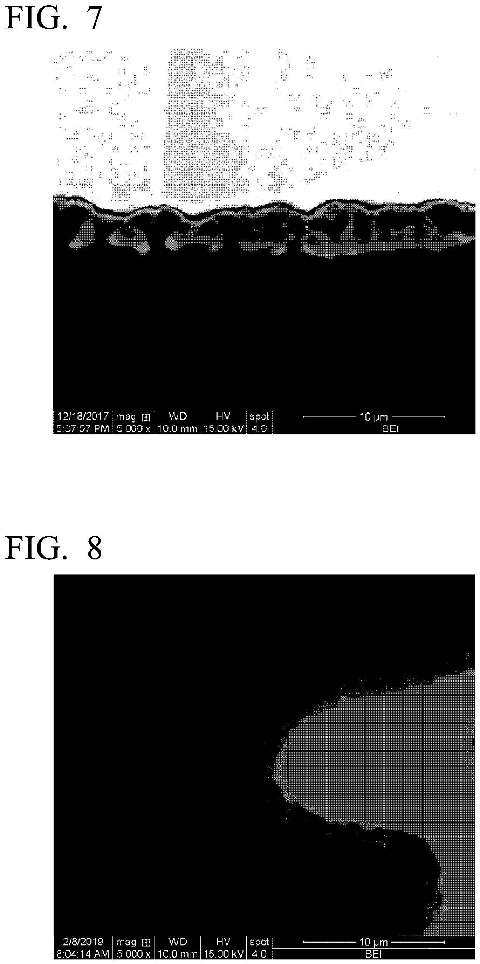

Fig. 7 shows a cross-sectional observation result (SEM image) of the titanium base material of Invention Example 1 in which the base material body is a plate material.

In addition, Fig. 8 shows a cross-sectional observation result (SEM image) of the titanium base material of Invention Example 11 in which the base material body is a porous body.

(Conductivity)

From the obtained titanium base material, a strip-shaped test piece which was width 30 mm x length 40 mm x thickness 0.3 mm was prepared and the conductivity was measured by the 4-probe method. When the measured conductivity value was 1 S/cm or more, the evaluation was "A (pass)", and when less than 1 S/cm, the evaluation was "B (not possible)". The evaluation results are shown in Table 2.

(Corrosion Resistance)

Cyclic voltammetry measurement was performed in a cell with a radius of 4 cm filled with 1 M sulfuric acid, with the created titanium base material prepared as the working electrode and the coiled Pt wire as the counter electrode. The sweep was repeated between 0-2V for the Ag/AgCl electrode used as the reference electrode. Cyclic voltammetry was measured for 1,000 cycles, and when no change was seen in the CV waveform, the evaluation was "A (pass)", and when a change was observed, the evaluation was "B (not possible)". The evaluation results are shown in Table 2.

[Table 1]

| | | Base material body | | TiO$_2$ film forming step | | | | Reduction process step | | |
|---|---|---|---|---|---|---|---|---|---|---|
| | | Material | Shape | Method | Process temperature (°C) | Process time (min) | Film thickness (μm) | Method | Base Material temperature (°C) | Process time (min) |
| Invention Examples | 1 | Titanium | Plate | Plasma electrolytic oxidation | 25 | 30 | 3 | Microwave reduction | 80 | 1 |
| | 2 | Titanium | Plate | Plasma electrolytic oxidation | 25 | 30 | 3 | Microwave reduction | 200 | 3 |
| | 3 | Titanium | Plate | Plasma electrolytic oxidation | 25 | 300 | 30 | Microwave reduction | 400 | 15 |
| | 4 | Titanium | Plate | Plasma electrolytic oxidation | 25 | 50 | 5 | Microwave reduction | 250 | 5 |
| | 5 | Titanium | Plate | Plasma electrolytic oxidation | 25 | 10 | 1 | Microwave reduction | 50 | 0.5 |
| | 6 | Titanium | Plate | Plasma electrolytic oxidation | 25 | 1 | 0.1 | Microwave reduction | 30 | 0.1 |
| | 7 | Titanium | Porous body (porosity 60%) | Plasma electrolytic oxidation | 25 | 30 | 3 | Microwave reduction | 200 | 3 |
| | 8 | Titanium Alloy | Porous body (porosity 60%) | Plasma electrolytic oxidation | 25 | 30 | 3 | Microwave reduction | 200 | 3 |
| | 9 | Titanium | Porous body (porosity 30%) | Plasma electrolytic oxidation | 25 | 30 | 3 | Microwave reduction | 200 | 3 |

| | | Base material body | | TiO$_2$ film forming step | | | | Reduction process step | | |
|---|---|---|---|---|---|---|---|---|---|---|
| | | Material | Shape | Method | Process temperature (°C) | Process time (min) | Film thickness ($\mu$m) | Method | Base Material temperature (°C) | Process time (min) |
| | 10 | Titanium | Porous body (porosity 90%) | Plasma electrolytic oxidation | 25 | 30 | 3 | Microwave reduction | 200 | 3 |
| | 11 | Titanium | Porous body (porosity 80%) | Plasma electrolytic oxidation | 25 | 20 | 2 | Microwave reduction | 50 | 0.5 |
| Comparative Examples | 1 | Titanium | Plate | Plasma electrolytic oxidation | 25 | 30 | 3 | - | - | - |
| | 2 | Titanium | Plate | Plasma electrolytic oxidation | 25 | 0.01 | 0.01 | Microwave reduction | 30 | 0.1 |
| | 3 | Titanium | Porous body (porosity 60%) | Atmospheric oxidation | 500 | 180 | - | - | - | - |
| | 4 | Titanium | Porous body (porosity 60%) | Plasma electrolytic oxidation | 25 | 5 | 3 | Thermal reduction | 1000 | 60 |
| | 5 | Titanium | Porous body (porosity 60%) | Plasma electrolytic oxidation | 25 | 5 | 3 | Thermal reduction | 800 | 120 |
| | 6 | Titanium | Plate | Plasma electrolytic oxidation | 25 | 10 | 1 | Microwave reduction | 650 | 30 |
| | 7 | Titanium | Porous body (porosity 80%) | Plasma electrolytic oxidation | 25 | 20 | 2 | - | - | - |

[Table 2]

| | | Identification of titanium oxide | | | Film thickness of titanium oxide film ($\mu$m) | Conductivity | Corrosion resistance |
|---|---|---|---|---|---|---|---|
| | | Magneli phase * | $Ti_4O_7$ | $Ti_5O_9$ | | | |
| Invention Examples | 1 | Presence | Presence | Presence | 3 | A | A |
| | 2 | Presence | Presence | Presence | 3 | A | A |
| | 3 | Presence | Presence | Presence | 30 | A | A |
| | 4 | Presence | Presence | Presence | 5 | A | A |
| | 5 | Presence | Presence | Presence | 1 | A | A |
| | 6 | Presence | Presence | Presence | 0.1 | A | A |
| | 7 | Presence | Presence | Presence | 3 | A | A |
| | 8 | Presence | Presence | Presence | 3 | A | A |
| | 9 | Presence | Presence | Presence | 3 | A | A |
| | 10 | Presence | Presence | Presence | 3 | A | A |
| | 11 | Presence | Presence | Presence | 2 | A | A |
| Comparative Examples | 1 | Absence | Absence | Absence | 3 | B | - |
| | 2 | Absence | Absence | Absence | 0.01 | A | B |
| | 3 | Absence | Absence | Absence | - | - | - |
| | 4 | Absence | Absence | Absence | - | - | - |
| | 5 | Absence | Absence | Absence | - | - | - |
| | 6 | Absence | Absence | Absence | 1 | - | - |
| | 7 | Absence | Absence | Absence | 2 | B | - |
| * Magneli phase: Presence or absence of Magneli phase titanium oxide represented by Chemical formula $Ti_nO_{2n-1}$ ($4 \leq n \leq 10$) | | | | | | | |

In Comparative Example 1 and Comparative Example 7 in which the base material body after plasma electrolytic oxidation was not subjected to microwave plasma reduction, the Magneli phase titanium oxide film was not formed and the conductivity was insufficient. Therefore, the corrosion resistance was not evaluated.

In Comparative Example 2 in which the process time of the plasma electrolytic oxidation was shortened to 1 second to reduce the thickness of the $TiO_2$ film and then the microwave plasma reduction was performed, the Magneli phase titanium oxide film was not formed and the thickness of the titanium oxide film was as thin as 0.01 $\mu$m and the corrosion resistance was insufficient. It is presumed that this is because it was not possible to stably form a $TiO_2$ film of 0.1 $\mu$m or less in the plasma electrolytic oxidation and the Magneli phase titanium oxide film was not sufficiently formed even by subsequent microwave plasma reduction.

In Comparative Example 3 in which an attempt was made to form the $TiO_2$ film by atmospheric oxidation, it was necessary to set the process temperature to a temperature higher than 400°C. Therefore, oxygen was diffused into the base material body and deterioration of the base material body was observed. Thus, evaluation of the conductivity and corrosion resistance was not carried out.

In Comparative Examples 4 and 5 in which the base material body after plasma electrolytic oxidation was subjected to thermal reduction in a vacuum, it was necessary for the thermal reduction process temperature to be 800°C or higher. Therefore, oxygen was diffused into the base material body and deterioration of the base material body was observed. Thus, evaluation of the conductivity and corrosion resistance was not carried out.

In Comparative Example 6 in which the microwave plasma reduction process was carried out on the base material body after plasma electrolytic oxidation under conditions of a temperature of 650°C for a process time of 30 minutes, the process temperature was high and the process time was long, thus, it was not possible to obtain the desired Magneli phase titanium oxide. In addition, as in Comparative Examples 4 and 5, the deterioration of the base material due to oxygen diffusion into the Ti base material body was also observed, although only slightly, thus, evaluation of the conductivity and corrosion resistance was not carried out.

On the other hand, it was confirmed that Invention Examples 1 to 11 in which the Magneli phase titanium oxide film was formed were excellent in conductivity and corrosion resistance. In addition, as shown in Figs. 7 and 8, in the titanium base materials of Invention Example 1 and Invention Example 11, it was confirmed that the Magneli phase titanium oxide films had porous structures. Furthermore, as shown in Fig. 8, it was confirmed that the Magneli phase titanium oxide film was formed relatively uniformly on the surface of the base material body even in a case where the base material body was formed of a porous body.

(Example 2)

Next, as shown in Table 3, a titanium base material (Invention Example 11) on which a Magneli phase titanium oxide film was formed and a titanium base material (Comparative Example 7) on which a titanium oxide film (insulating titanium oxide film) which was not a Magneli phase titanium oxide film was formed were each used as an anode electrode, a solid polymer water electrolysis cell (area 4 cm × 4 cm) having the structure shown in Fig. 5 was formed and set as Invention Example 101 and Comparative Example 101.

In Comparative Example 102, a titanium base material on which a titanium oxide film was not formed on the surface of the base material body formed of a porous body was used as the anode electrode.

For this water electrolysis cell, a voltammetry test was carried out at 2.5 V for 1 minute and 0 V for 1 minute as one cycle. The current density flowing in the cell due to water electrolysis was measured. The test temperature was 80°C. The evaluation results are shown in Table 3.

Here, Table 3 shows the ratio of the current density after each cycle with respect to the initial value, with the current density at the tenth cycle as the initial value and using this initial value as a reference value (1.0).

[Table 3]

| | | Anode electrode | Voltammetry test | | |
| --- | --- | --- | --- | --- | --- |
| | | | After 400 cycles | After 800 cycles | After 1,200 cycles |
| Invention Example | 101 | Invention Example 11 | 0.957 | 1.053 | 0.933 |
| Comparative Examples | 101 | Comparative Example 7 | - | - | - |
| | 102 | No titanium oxide film | 0.648 | 0.648 | 0.587 |

In Comparative Example 101 in which the titanium base material (Comparative Example 7) on which a titanium oxide film (insulating titanium oxide film) which was not a Magneli phase titanium oxide film was formed was used as the anode electrode, the current density at the initial stage was very low at 0.1 A/cm$^2$ or less. For this reason, the voltammetry test was not carried out.

In addition, in Comparative Example 102 in which a titanium base material not having a titanium oxide film formed on the surface of the base material body formed of a porous body was used as the anode electrode, the current density was 0.65 of the initial value after 400 cycles and 0.59 of the initial value after 1,200 cycles. It is presumed that the anode electrode (titanium base material) was oxidized and deteriorated.

On the other hand, in Invention Example 101 in which the titanium base material on which the Magneli phase titanium oxide film was formed (Invention Example 11) was used as the anode electrode, the current density was 0.97 of the initial value after 400 cycles, 1.05 of the initial value after 800 cycles, and 0.93 of the initial value after 1,200 cycles, and did not change significantly from the initial value even if the number of cycles increased. It is presumed that the deterioration of the anode electrode (titanium base material) due to oxidation was suppressed.

From the above experimental results, according to the Invention Examples, it was confirmed that it is possible to provide a titanium base material with particularly excellent conductivity and corrosion resistance and able to be used even in a harsh corrosive environment, a method for producing a titanium base material, an electrode for water electrolysis formed of this titanium base material, and a water electrolysis device.

[Reference Signs List]

10 Titanium base material
11 Base material body
16 Magneli phase titanium oxide film

26 $TiO_2$ film
30 Water electrolysis device
32 Anode (electrode for water electrolysis)

**Claims**

1. A titanium base material comprising:

   a base material body formed of titanium or a titanium alloy,
   wherein a Magneli phase titanium oxide film formed of a Magneli phase titanium oxide represented by a chemical formula $Ti_nO_{2n-1}$ ($4 \leq n \leq 10$) is formed on a surface of the base material body.

2. The titanium base material according to claim 1,
   wherein the Magneli phase titanium oxide film contains at least one or both of $Ti_4O_7$ and $Ti_5O_9$.

3. The titanium base material according to claim 1 or 2,
   wherein the Magneli phase titanium oxide film has a film thickness in a range of 0.1 $\mu$m or more and 30 $\mu$m or less.

4. The titanium base material according to any one of claims 1 to 3,
   wherein the base material body is a porous body having a porosity in a range of 30% or more and 97% or less.

5. The titanium base material according to any one of claims 1 to 4,
   wherein the Magneli phase titanium oxide film has a porous structure.

6. A method for manufacturing the titanium base material according to any one of claims 1 to 5, the method comprising:

   a $TiO_2$ film forming step of forming a $TiO_2$ film on a surface of a base material body formed of titanium or a titanium alloy; and
   a reduction process step of reducing the $TiO_2$ film formed on the surface of the base material body by a microwave plasma reduction method to obtain a Magneli phase titanium oxide film formed of a Magneli phase titanium oxide represented by a chemical formula $Ti_nO_{2n-1}$ ($4 \leq n \leq 10$),
   wherein the reduction process step is carried out under conditions of a substrate temperature of 400°C or lower and a process time of 15 minutes or less.

7. An electrode for water electrolysis, comprising:
   the titanium base material according to any one of claims 1 to 5.

8. The electrode for water electrolysis according to claim 7,
   wherein, in a voltammetry test in which one cycle is denoted by a holding time of 1 minute at 2.5 V and 1 minute at 0 V, an electrolysis efficiency after 1,200 cycles is 90% or more of an initial value.

9. A water electrolysis device comprising:
   the electrode for water electrolysis according to claim 7 or 8.

FIG. 1

FIG. 2

# FIG. 3

```
┌─────────────────────────┐
│   BASE MATERIAL BODY    │ ⌐ S01
│     PREPARING STEP      │
└─────────────────────────┘
             │
             ▼
┌─────────────────────────┐
│  TiO₂ FILM FORMING STEP │ ⌐ S02
└─────────────────────────┘
             │
             ▼
┌─────────────────────────┐
│  REDUCTION PROCESS STEP │ ⌐ S03
└─────────────────────────┘
             │
             ▼
   ( TITANIUM BASE MATERIAL )
```

FIG. 4

(a)

11

(b)

26

t0

11

(c)

10

16

t

11

FIG. 5

## FIG. 6

FIG. 7

FIG. 8

**INTERNATIONAL SEARCH REPORT**

| | International application No. |
|---|---|
| | PCT/JP2019/010073 |

**A.  CLASSIFICATION OF SUBJECT MATTER**

Int.Cl.  C23C28/04(2006.01)i,    C22C14/00(2006.01)i,    C25B9/00(2006.01)i,
         C25B11/03(2006.01)i,    C25B11/10(2006.01)i,    C25B13/02(2006.01)i,
         C25B13/04(2006.01)i,    C25D11/26(2006.01)i,    C23C26/00(2006.01)n,
         H01M4/86(2006.01)n,  H01M4/88(2006.01)n,  H01M8/10(2016.01)n

**B.  FIELDS SEARCHED**

Minimum documentation searched (classification system followed by classification symbols)

Int.Cl.  C23C28/04, C22C14/00, C25B9/00, C25B11/03, C25B11/10, C25B13/02,
         C25B13/04, C25D11/26, C23C26/00, H01M4/86, H01M4/88, H01M8/10

Documentation searched other than minimum documentation to the extent that such documents are included in the fields searched

| Published examined utility model applications of Japan | 1922–1996 |
|---|---|
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2006-527794 A (AKZO NOBEL N.V.) 07 December 2006, claims, paragraphs [0001]-[0043] & WO 2004/111310 A2, claims, pp. 1-7 & EP 1489200 A1 | 1-3, 5, 7-9 |
| Y | | 3-9 |
| X | US 2005/0014066 A1 (SHIMAMUNE, Takayuki) 20 January 2005, paragraphs [0001]-[0043], claims (Family: none) | 1-3, 5, 7-9 |
| Y | | 3-9 |

☒  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 June 2019 (04.06.2019) | 11 June 2019 (11.06.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 767 009 A1**

**INTERNATIONAL SEARCH REPORT**

International application No.

PCT/JP2019/010073

C (Continuation). DOCUMENTS CONSIDERED TO BE RELEVANT

| Category* | Citation of document, with indication, where appropriate, of the relevant passages | Relevant to claim No. |
|---|---|---|
| X | JP 03-252057 A (EBONEX TECHNOLOGIES, INC.) 11 November 1991, pp. 1-4 & EP 443230 A1, columns 1-5 | 1-2, 4-5, 7-8 |
| Y | | 3-9 |
| X | JP 2016-201300 A (TOYOTA MOTOR CORP.) 01 December 2016, claims, paragraphs [0001]-[0071] & US 2016/0301087 A1, claims, paragraphs [0001]-[0095] | 1-2, 5-6 |
| Y | | 3-9 |
| X | JP 2010-521590 A (INDUSTRIE DE NORA S.P.A.) 24 June 2010, claims, paragraphs [0001]-[0033] & WO 2008/113841 A2, claims, page 1, line 1 to page 12, line 11 | 1-2, 5, 7-9 |
| Y | | 3-9 |
| Y | JP 2012-067336 A (ARAI, Masaaki) 05 April 2012, claims, paragraphs [0001]-[0043] (Family: none) | 3-9 |
| Y | JP 2010-138023 A (KYOTO UNIVERSITY) 24 June 2010, claims, paragraphs [0001]-[0029], [0043]-[0044], fig. 14 (Family: none) | 3-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018044659 A
- JP 2019042773 A
- JP 2003226992 A
- JP 2010135316 A
- JP 5831670 B
- JP 2010236083 A
- JP 2006138005 A
- JP 2003082405 A

**Non-patent literature cited in the description**

- **TSUTOMU IOROI.** Stability of Corrosion-Resistant Magneli-Phase Ti4O7-Supported PEMFC Catalysts High Potentials. *Jornal of The Electorochemical Society,* 2008, vol. 155 (4), B321-B326